(19) Europäisches Patentamt
European Patent Office
Office européen des brevets

(11) **EP 2 652 409 B1**

(12) **EUROPÄISCHE PATENTSCHRIFT**

(45) Veröffentlichungstag und Bekanntmachung des Hinweises auf die Patenterteilung:
**04.11.2015 Patentblatt 2015/45**

(21) Anmeldenummer: **11794489.2**

(22) Anmeldetag: **13.12.2011**

(51) Int Cl.:
*F25B 30/02* (2006.01)          *F24D 3/18* (2006.01)
*F25B 49/02* (2006.01)          *F24D 19/10* (2006.01)

(86) Internationale Anmeldenummer:
**PCT/EP2011/072575**

(87) Internationale Veröffentlichungsnummer:
**WO 2012/080225 (21.06.2012 Gazette 2012/25)**

(54) **VERFAHREN ZUM BETRIEB EINER WÄRMEPUMPENEINRICHTUNG**

METHOD FOR OPERATING A HEAT PUMP DEVICE

PROCÉDÉ PERMETTANT DE FAIRE FONCTIONNER UN SYSTÈME DE POMPE À CHALEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.12.2010 DE 102010054564**

(43) Veröffentlichungstag der Anmeldung:
**23.10.2013 Patentblatt 2013/43**

(73) Patentinhaber: **Robert Bosch GmbH**
**70442 Stuttgart (DE)**

(72) Erfinder: **TOLLSTEN, Mikael**
**S-57373 Sunhultsbrunn (SE)**

(56) Entgegenhaltungen:
**EP-A1- 1 507 122     DE-A1- 3 325 993**
**US-A- 4 292 813**

**Beschreibung**

Die Erfindung betrifft ein Verfahren zum Betrieb einer Wärmepumpeneinrichtung nach dem Oberbegriff des Patentanspruches 1.

Aus dem Stand der Technik sind Wärmepumpen zur Gewinnung von Wärme bekannt, die zum Beispiel als Heizungsanlagen für Gebäude und Fahrzeuge zum Einsatz kommen. Dabei wird die Wärmegewinnung dadurch erreicht, dass die Temperatur eines Kältemittels in einem Wärmetauscher durch einen erzeugten Unterdruck niedriger ist als die eines umströmenden Mediums, sodass das umströmende Medium über den Wärmetauscher Wärme auf das durchströmende Kältemittel überträgt. Auf diese Weise kann beispielsweise bei einer Luft-Wärmepumpe selbst bei sehr niedrigen Außentemperaturen, zum Beispiel auch unter 0 °C, noch Wärme von umströmender Luft auf das Kältemittel übertragen werden, sofern die Temperatur des Kältemittels im Wärmetauscher ebenfalls unter 0 °C liegt.

Das im Wärmetauscher erwärmte Kältemittel strömt anschließend in einen unter Druck stehenden zweiten Wärmetauscher. Aufgrund des hier vorliegenden hohen Drucks liegt die Temperatur des Kältemittels deutlich über der Temperatur, die nach der Wärmeaufnahme im ersten Wärmetauscher vorliegt. Insbesondere ist die Temperatur höher als die einer Abnehmerseite, für welche die gewonnene Wärme bestimmt ist. Das Kältemittel hat dann im zweiten Wärmetauscher beispielsweise eine Temperatur von 55°C, während die Abnehmerseite eine Temperatur von 23°C aufweist. Dementsprechend gibt das Kältemittel im zweiten Wärmetauscher Wärme an die Abnehmerseite ab, um anschließend abgekühlt zurück zum ersten Wärmetauscher zu strömen. Dabei ist das Kältemittel beim Eintritt in den Wärmetauscher im gasförmigen und beim Verlassen im flüssigen Zustand, weil die bei der Kondesation frei werdende Energie an das Heizwasser übertragen wurde.

Hauptbestandteile einer Wärmepumpeneinrichtung sind neben dem ersten und zweiten Wärmetauscher in der Regel ein Expansionsventil und ein Kompressor zum Verdichten des Kältemittels. Diese sind im Stand der Technik derart in Strömungsrichtung eines Leitungskreislaufs für das Kältemittel angeordnet, dass sich der Wärme abgebende Wärmetauscher zwischen dem Kompressor und der Drossel befindet, sowie der Wärme aufnehmende Wärmetauscher nach der Drossel positioniert ist.

Aus dem Stand der Technik ist auch bekannt, dass ein Heizkreislauf mit einem durchströmenden Heizmedium als Abnehmerseite vorgesehen ist, wobei der Wärme abgebende Wärmetauscher der Wärmepumpe Bestandteil des Heizkreislaufes ist. In diesem kann eine Wärmeübertragung zwischen dem Kältemittel und dem Heizmedium erfolgen. Weiterhin wird der Heizkreislauf derart gebildet, dass der Wärmetauscher über einen Vorlauf und einen Rücklauf mit einem weiteren Wärmetauscher verbunden ist. Letzterer gibt die Wärme in der Regel an den endgültigen Abnehmer ab, zum Beispiel an ein Haus, Raum oder Fahrzeug.

Da unterschiedliche Wärmedeltas zwischen den Vorläufen und Rückläufen der Wärmetauscher zu einer gesteigerten Effizienz führen, sieht der Stand der Technik vor, dass der Vorlauf und der Rücklauf des Heizkreislaufs über einen Bypass hydraulisch verbunden sind und jedem der Wärmetauscher eine Pumpe zugeordnet ist. Auf diese Weise lassen sich unterschiedliche Durchsätze in den Wärmetauschern einstellen. Als besonders vorteilhaft hat es sich erwiesen, wenn das Heizmedium im Wärme aufnehmenden Wärmetauscher bei geringerem Durchsatz um circa 7 K erwärmt wird und im Wärme abgebenden Wärmetauscher bei höherem Durchsatz 3-5 K abkühlt.

Die Wärmepumpeneinrichtung hat einen Wirkungsgrad, der anhand einer Leistungszahl (COP) ausgedrückt wird. Diese entspricht dem Quotienten aus der an die Verbraucherseite abgegebenen Wärmeleistung ($Q_c$) und der zum Betrieb der Wärmepumpeneinrichtung eingesetzten Antriebsleistung (W), wobei sich die Antriebsleistung (W) im Wesentlichen aus den elektrischen Anschlussleistungen des Kompressors und gegebenenfalls eines Strömungserzeugers des umströmenden Mediums zusammensetzt.

Da die Temperatur im Heizkreislauf möglichst konstant sein soll, ist es erforderlich die Wärmegewinnung an- und auszuschalten, indem die Wärmepumpeneinrichtung aktiviert oder deaktiviert wird. Hieraus ergibt sich eine Hysteresekurve um die Solltemperatur im Vorlauf hinter dem Bypass, weil die Temperatur bedingt durch eine Deaktivierung der Wärmepumpeneinrichtung unter die Solltemperatur fällt. Oder bei Aktivierung über die Solltemperatur hinaus steigt, beispielsweise um eine vorgebbare Mindestlaufzeit der Wärmepumpeneinrichtung zu erreichen. Zur Bestimmung dieser Aktivierungs- und Deaktivierungsphasen der Wärmepumpeneinrichtung, wird im Stand der Technik werkseitig bei der Installation von einem Monteur der Wärmepumpeneinrichtung eine unveränderliche Hysteresekurve festgelegt und hinterlegt. Diese ist entweder zeitbasiert oder zeit- und temperaturbasiert.

Nachteile des Standes der Technik ergeben sich daraus, dass sich die bestmögliche Hysteresekurve je nach Wärmepumpeneinrichtung und vor allem je nach vorhandener Gesamtanlagensituation (Abnehmerseite, andere Heizungen, etc.) unterscheidet, und von den Temperaturen des umströmenden Mediums sowie des Heizkreislaufs abhängt. Es ist dementsprechend schwer für den Monteur, die richtige Einstellung zu finden, die zudem bei sich verändernden Temperaturen, insbesondere der Solltemperatur und der Temperatur des umströmenden Mediums, nicht mehr optimal ist. Weiterhin entstehen auch Verluste bei einer Überschreitung .der Solltemperatur durch das relativ warme Heizmedium im Vorlauf vor dem Bypass. Deshalb erreicht die Leistungszahl (COP) nicht die Höhe, die theoretisch erreichbar wäre.

Die EP 1507122 A1 offenbart ein Verfahren zum Betrieb einer Wärmepumpeneinrichtung mit einem zugeordneten Heizkreislauf, in dem ein Heizmedium zirkuliert, und der einen ersten Wärmetauscher und einen zweiten Wärmetauscher aufweist, die über einen Vorlauf und einen Rücklauf verbunden sind, wobei ein Bypass den Vorlauf und den Rücklauf hydraulisch verbindet, eine erste Pumpe im Vorlauf hinter dem Bypass angeordnet ist, eine zweite Pumpe im Vorlauf vor dem Bypass angeordnet ist, und wobei die Wärmepumpeneinrichtung und der Heizkreislauf über den zweiten Wärmetauscher thermisch gekoppelt sind, wobei eine Regeleinheit die Wärmepumpeneinrichtung deaktiviert.

Ausgehend vom Stand der Technik ist es Aufgabe der Erfindung, die bestehenden Nachteile des Standes der Technik zu beseitigen. Insbesondere soll die Leistungszahl (COP) der Wärmepumpeneinrichtung durch bessere Auslegung der Aktivierungs- und/oder Deaktivierungsphasen erhöht werden. Die Lösung soll dabei ökonomische Vorteile bieten, sowie zuverlässig und einfach handhabbar sein.

Erfindungsgemäß wird dies mit den Merkmalen des Patentanspruches 1 gelöst. Vorteilhafte Weiterbildungen sind den Unteransprüchen zu entnehmen.

Die Erfindung betrifft ein Verfahren zum Betrieb einer Wärmepumpeneinrichtung mit einem zugeordneten Heizkreislauf, in dem ein Heizmedium zirkuliert, und der einen ersten Wärmetauscher und einen zweiten Wärmetauscher aufweist, die über einen Vorlauf und einen Rücklauf verbunden sind, wobei ein Bypass den Vorlauf und den Rücklauf hydraulisch verbindet, eine erste Pumpe im Vorlauf hinter dem Bypass oder im Rücklauf vor dem Bypass angeordnet ist, eine zweite Pumpe im Vorlauf vor dem Bypass oder im Rücklauf hinter dem Bypass angeordnet ist, wobei die Wärmepumpeneinrichtung und der Heizkreislauf über den zweiten Wärmetauscher thermisch gekoppelt sind, und wobei eine Regeleinheit die Wärmepumpeneinrichtung deaktiviert, sobald ein auf die Wärmepumpeneinrichtung gerichteter Effizienzverlust größer ist als ein Anfahrverlust bei einem Neustart der Wärmepumpeneinrichtung.

Mittels der thermischen Kopplung kann die Wärmepumpeneinrichtung dem Heizmedium im zweiten Wärmetauscher Wärme zuführen. In einer einfachen Ausgestaltung könnte die Wärmepumpeneinrichtung dafür aus einem Kältemittel durchströmten Kreislauf bestehen, in dem der zweite Wärmetauscher derart angeordnet ist, dass eine Wärmeübertragung zwischen dem Kältemittel und dem Heizmedium in dem zweiten Wärmtauscher stattfinden kann. Insbesondere wäre der zweite Wärmetauscher weiterhin über eine einen Kompressor aufweisende Zuleitung und eine ein Expansionsventil aufweisende Rückleitung mit einem Verdampfer verbunden.

Mit zunehmender Aktivierungszeit der Wärmepumpeneinrichtung kann die Temperatur des Heizmediums im Rücklauf (Rücklauftemperatur) ansteigen. Durch diesen Anstieg sinkt das Temperaturdelta zwischen dem Kältemittel der Wärmepumpeneinrichtung und dem Heizmedium des Heizkreislaufs im zweiten Wärmetauscher. Dies hat zur Folge, dass eine geringere Wärmemenge ($Q_c$) zwischen dem Kältemittel und dem Heizmedium bei unveränderter Antriebsleistung (W) der Wärmepumpeneinrichtung übertragbar ist, was den Effizienzverlust verursacht. Die höhere Temperatur des Heizmediums bringt die Hochdruckseite der Wärmepumpeneinrichtung dabei in Temperatur- und Druckbereiche, in denen der Kompressor schwerer läuft. Gemeint ist damit als Ursache die höhere Druckdifferenz zwischen der Hoch- und der Niederdruckseite. Die Abnahme der Effizienz macht sich in diesem Fall durch den zunehmenden Stromverbrauch des Kompressors bemerkbar.

Der Anfahrverlust der Wärmepumpeneinrichtung entsteht insbesondere dadurch, dass die Wärmepumpeneinrichtung nicht unmittelbar nach der Aktivierung Wärme gewinnen kann. Vor allem muss zunächst durch den Kompressor das notwendige Druckgefälle in der Wärmepumpeneinrichtung erzeugt werden. Somit ist Antriebsleistung (W) erforderlich, ohne dass dem eine erzeugte Wärmemenge ($Q_c$) entgegensteht. Diese Antriebsleistung verursacht den Anfahrverlust.

Durch die Deaktivierung der Wärmepumpe, sobald der Effizienzverlust größer ist als der Anfahrverlust, ist sichergestellt, dass die Wärmepumpe nicht in einem ungünstigen Betriebszustand aktiviert bleibt. Stattdessen ist es vorteilhaft die Wärmepumpeneinrichtung zu deaktivieren und wieder neu zu aktivieren, wobei der Aktivierungszeitpunkt nicht unmittelbar im Anschluss erfolgen muss, sondern anderweitig bestimmbar ist. Auch wird die Wärmepumpeneinrichtung nicht schon deaktiviert, solange eine erneute Aktivierung einen höheren Anfahrverlust verursacht als eine Aufrechterhaltung der Aktivierung. Somit erfolgt die Deaktivierung zum bestmöglichen Zeitpunkt, sodass der COP erhöht wird. Eine Einstellung durch den Monteur kann entfallen und die Deaktivierung erfolgt immer zum optimalen Deaktivierungszeitpunkt unabhängig von der Gesamtanlagensituation.

Gemäß einer Variante wird eine Temperatur des Heizmediums im Vorlauf vor dem Bypass bestimmt. Diese Temperatur entspricht somit der Temperatur des Heizmediums am Ausgang des zweiten Wärmetauschers. Sie gibt adäquat kausal auch Auskunft über die Rücklauftemperatur. Sie ergibt sich aus der bestimmten Temperatur minus der im zweiten Wärmetauscher zugeführten erzeugten Wärmemenge. Es ist somit nicht erforderlich die Rücklauftemperatur zu bestimmen und es kann auf einen Temperatursensor im Rücklauf verzichtet werden. Es fallen somit keine Kosten und konstruktiven Aufwendungen für einen solchen Temperatursensor an.

Entsprechend der Erfindung kann vorgesehen sein, dass eine Solltemperatur für das Heizmedium im Vorlauf hinter dem Bypass vorgegeben wird. Dies kann beispielsweise durch eine Einstellung an einer Hausheizung oder durch automatische Bestimmung des Heizbedarfs in Abhängigkeit der Wetterlage erfolgen. Ein solcher Sollwert dient der Ermittlung der optimalen Zeitpunkte für die Aktivierung und die Deaktivierung der Wärmepumpeneinrichtung. Somit hat der Sollwert einen positiven Einfluss auf den COP der Wärmepumpeneinrichtung.

Weiterhin kann ein Temperaturdeltafaktor vorgegeben werden. Dieser entspricht einem prozentualen Verlust der Wärmepumpe pro Temperatureinheit einer Überschreitung der Solltemperatur durch die Temperatur im Vorlauf vor dem Bypass. Der Temperaturdeltafaktor einer üblichen Wärmepumpeneinrichtung beträgt zwischen 0 %/K und 5 %/K und ist abhängig von der Wärmepumpeneinrichtung. Er ist somit korrekt bestimmbar, ohne dass die Gesamtanlagensituation zu berücksichtigen ist. Der Temperaturdeltafaktor kann unter anderem durch den Hersteller der Wärmepumpeneinrichtung im Vorfeld bestimmt werden. Eine Einstellung durch den Monteur ist nicht erforderlich. Der Temperaturdeltafaktor dient der Ermittlung des optimalen Zeitpunkts für die Deaktivierung. Somit hat dieser einen positiven Einfluss auf den COP der Wärmepumpeneinrichtung.

Eine Ausführung der Erfindung sieht vor, dass der Effizienzverlust ermittelt wird. Eine direkte Ermittlung hat den Vorteil, dass keine Einstellungen durch den Monteur getroffen werden müssen. Unabhängig von der Gesamtanlagensituation wird der Effizienzverlust korrekt bestimmt, wodurch der optimale Deaktivierungszeitpunkt getroffen wird, was den COP erhöht. Der Effizienzverlust wird nunmehr derart ermittelt werden, dass ab dem Beginn der Aktivierung der Wärmepumpeneinrichtung wenigstens zweimal, am besten jedoch häufiger und in einem bestimmten Takt, die Differenz von der Solltemperatur und der aktuellen Temperatur im Vorlauf vor dem Bypass mit dem Temperaturdeltafaktor multipliziert und zu 100 % addiert, sowie aus den so ermittelten Werten ein Mittelwert berechnet wird. Das heißt:

$$TY = \frac{\sum_{1}^{n}\left[(SP(n) - T8(n)) * TF + 100\%\right]}{n} \qquad mit \quad \frac{0\%}{K} \leq TF \leq \frac{5\%}{K}$$

*und* TY = Effizienzverlust

*n = die Anzahl berechneter Werte*

SP = *Solltemperatur*

T8 = *Temperatur im Verlauf vor dem Bypass*

*T*F = *Temperaturdeltafaktor*

Somit wird der Effizienzverlust während der Aktivierung der Wärmepumpeneinrichtung ermittelt und diese deaktiviert, sobald der Effizienzverlust größer ist als der Anfahrverlust.

Entsprechend einer Ausgestaltung wird eine Zykluszeit ab dem Zeitpunkt des Endes der vorhergehenden Aktivierung der Wärmepumpeneinrichtung bestimmt. Eine solche Zykluszeit kann der Ermittlung des Anfahrverlustes dienen. Somit hat die Ermittlung der Zykluszeit einen positiven Einfluss auf den COP der Wärmepumpeneinrichtung. Der Monteur der Wärmepumpeneinrichtung muss hierfür keine Einstellungen vornehmen.

Zusätzlich sieht das Verfahren eine Variante vor, bei der eine Anfahrzeit vorgebbar ist oder aus den vorausgegangenen Aktivierungen bestimmt wird.

Eine vorgegebene Anfahrzeit entspräche dem Zeitraum des Druckaufbaus in der Wärmepumpeneinrichtung, welche relativ konstant ist. In einer solchen Ausgestaltung ist eine Berechnung nicht notwendig und es sind keine Bauteile hierfür notwendig. Trotzdem wird der Deaktivierungszeitpunkt relativ genau getroffen und der COP ist hoch. Die Anfahrzeit kann jedoch auch ermittelt werden. Zum Beispiel indem der Temperaturverlauf des Heizmediums im Vorlauf vor dem Bypass nach dem Aktivieren der Wärmepumpe auf Änderungen hin beobachtet wird, insbesondere auf einen schnell einsetzenden Temperaturanstieg. Die Zeit von der Aktivierung bis zum Temperaturanstieg ist dann die Anfahrzeit.

Eine Variante der Erfindung sieht vor, dass der Anfahrverlust ermittelt wird. Hierdurch wird der Anfahrverlust nicht durch einen vorgegebenen Wert beschrieben, der unter Umständen vom tatsächlich vorliegenden Anfahrverlust abweicht. Somit kann mittels des genaueren Anfahrverlustes der Deaktivierungszeitpunkt optimaler bestimmt werden, was den COP erhöht. Der Monteur der Wärmepumpeneinrichtung muss hierfür keine Einstellungen vornehmen.

Mittels der Zykluszeit und der Anfahrzeit ist es nunmehr möglich den Anfahrverlust zu berechnen, indem die Zykluszeit minus einer Anfahrzeit durch die Zykluszeit geteilt und mit 100% multipliziert wird. Dies entspricht:

$$V = \frac{z(t) - c}{z(t)} * 100\%$$

mit V=Anfahrverlust, z(t)=Zykluszeit und c=Anfahrzeit

Der Anfahrverlust kann so genau bestimmt werden. Er dient dabei der korrekten Ermittlung des Deaktivierungszeitpunkts und verbessert so den COP. Voreinstellungen sind hierzu keine zu treffen.

Des Weiteren sieht die Erfindung eine Ausgestaltung vor, bei der eine Temperatur im Vorlauf hinter dem Bypass bestimmt wird. Eine solche Temperatur kann der Ermittlung einer erzeugten und einer abgegebenen Wärmemenge dienen. Diese sind geeignet, um eine COP optimierte Aktivierung der Wärmepumpeneinrichtung zu steuern. Somit hat die Ermittlung der Temperatur einen positiven Einfluss auf den COP der Wärmepumpeneinrichtung.

Zusätzlich sieht eine Variante der Erfindung vor, dass die Regeleinheit die Wärmepumpeneinrichtung aktiviert, sobald eine verlorene Wärmemenge am ersten Wärmetauscher während der Deaktivierung der Wärmepumpeneinrichtung größer ist als eine am zweiten Wärmetauscher zugeführte, durch die Wärmepumpe erzeugte Wärmemenge der vorangegangenen Aktivierung der Wärmepumpeneinrichtung. Somit wird die Wärmepumpe bei hoher Wärmeabgabe am ersten Wärmetauscher an einen Abnehmer schnell wieder aktiviert und bei geringer Wärmeabgabe ist die Deaktivierungszeit länger. Der Mittelwert der Temperatur im Vorlauf nach dem Bypass entspricht hierdurch deren Solltemperatur, ohne die Leistungszahl (COP) negativ zu beeinflussen.

Vorteilhaft ist, wenn die verlorene Wärmemenge bestimmt wird. Dies ist derart möglich, dass während der Deaktivierungsphase beispielsweise ein Integral über die Differenz der Temperatur im Vorlauf hinter dem Bypass und der Solltemperatur SP, ab dem Beginn der Deaktivierungsphase berechnet wird. Somit ist:

$$VW = - \int\limits_{DPh\ Anfang}^{t} T1(t) - SP(t)\ dt$$

    mit VW = verlorene Wärmemenge
    t = Zeit
    DPh Anfang = Anfang der Deaktivierungsphase
    T1 = Temperatur des Heizmediums im Vorlauf hinter dem Bypass
    SP = Solltemperatur

Die verlorene Wärmemenge kann so kontinuierlich während der Deaktivierungsphase bestimmt werden und der Aktivierungszeitpunkt erfolgt optimal. Hierdurch steigt der COP der Wärmepumpeneinrichtung.

Weiterhin ist von Vorteil, wenn die erzeugte Wärmemenge bestimmt wird. Unter anderem kann dies durch die Bildung eines Integrals über die Differenz der Temperatur im Vorlauf nach dem Bypass und der Solltemperatur, ab dem Beginn bis zum Ende der vorangegangenen Aktivierungsphase berechnet werden. Das heißt:

$$ZW = \int\limits_{APh\ Anfang}^{APh\ Ende} T1(t) - SP(t)\ dt$$

    mit ZW = erzeugte Wärmemenge
    t = Zeit
    APh Anfang = Anfang der Aktivierungsphase
    APh Ende = Ende der Aktivierungsphase
    T1 = Temperatur des Heizmediums im Vorlauf hinter dem Bypass
    SP = Solltemperatur

Durch diese Berechnung steht schon am Anfang einer Deaktivierungsphase fest, wie hoch die erzeugte Wärmemenge der vorangegangenen Aktivierungsphase war. Dieser Wert ist nunmehr kontinuierlich während der Deaktivierungsphase mit der verlorenen Wärmemenge vergleichbar. Dies ist auch durch folgende Beziehung beschreibbar:

$$\text{WENN} \int\limits_{APh\ Anfang}^{APh\ Ende} T1(t) - SP(t)\ dt \leq - \int\limits_{DPh\ Anfang}^{t} T1(t) - SP(t)\ dt \text{ DANN } von\ Deaktivierungs-\ in$$

$$Aktivierungsphase\ schalten$$

Solange die verlorene Wärmemenge kleiner ist als die in der vorangegangen Aktivierungsphase erzeugte Wärmemenge, wird die Deaktivierungsphase nicht beendet. Sobald die verlorene Wärmmenge jedoch gleich oder größer ist als die erzeugte Wärmemenge, wird von der Deaktivierungsphase in eine Aktivierungsphase geschaltet. Die Aktivierung der Wärmepumpeneinrichtung ist somit in jedem Zyklus auf die vorherige Aktivierungsphase abgestimmt und die Solltemperatur wird im Mittel stets erreicht. Hierdurch wird die Wärmepumpeneinrichtung zum best möglichen Zeitpunkt aktiviert und der COP ist dementsprechend hoch.

Da für die Ermittlung der erzeugten und der abgegebenen Wärmemenge nur eine Temperaturbestimmung im Vorlauf nach dem Bypass notwendig ist, kann während einer Deaktivierung der Wärmepumpeneinrichtung auch die zweite Pumpe deaktiviert werden. Vorteilhafterweise jedoch erst nach einem Nachlauf, damit die im zweiten Wärmetauscher vorhandene Restwärme noch vom Heizmedium aufgenommen werden kann. Bei Aktivierung der Wärmepumpeneinrichtung kann die zweite Pumpe gleichzeitig aktiviert werden, oder aber sie wird erst nach der Wärmepumpeneinrichtung aktiviert. Insbesondere erst dann, wenn die Temperatur des Kältemittels im zweiten Wärmetauscher ansteigt, beziehungsweise wenn die Anfahrzeit endet. In einer derartigen Ausgestaltung müsste die Anfahrzeit vorgegeben sein oder auf Seiten der Wärmepumpeneinrichtung bestimmt werden, denn sie ist nicht über eine Temperaturbestimmung im Vorlauf vor dem Bypass möglich, da das Heizmedium bei einer deaktivierten zweiten Pumpe hier nicht zirkuliert. Aufgrund der Tatsache, dass diese Pumpe zum Heizkreislauf gehört, hat dies zwar keinen Einfluss auf den COP der Wärmepumpeneinrichtung, jedoch wird auch hierdurch der Stromverbrauch für den Abnehmer reduziert.

In einer andere Ausführung des Verfahrens aktiviert die Regeleinheit die Wärmepumpeneinrichtung, sobald ein Integral über die Differenz der Temperatur im Vorlauf hinter dem Bypass und der Solltemperatur, ab dem Startzeitpunkt der vorhergehenden Aktivierung der Wärmepumpeneinrichtung während der Deaktivierung der Wärmepumpeneinrichtung kleiner als null ist.

Solange die verlorene Wärmemenge kleiner ist als die in der vorangegangen Aktivierungsphase erzeugte Wärmemenge, wird die Deaktivierungsphase somit nicht beendet. Sobald die verlorene Wärmmenge jedoch gleich oder größer ist als die erzeugte Wärmemenge, wird von der Deaktivierungsphase in eine Aktivierungsphase geschaltet. Die Berechnung des Aktivierungszeitpunktes der Wärmepumpeneinrichtung erfolgt somit zusammengefasst ab dem Zeitpunkt des Anfangs der vorhergehenden Aktivierung. Eine explizite Ermittlung der erzeugten Wärmemenge der vorhergehenden Aktivierungsphase ist nicht erforderlich. Der Wert ist im Gesamtintegral enthalten und muss nicht irgendwo hinterlegt werden, um anschließend mit dem Wert der verlorenen Wärmemenge abgeglichen werden zu können.

Die Solltemperatur wird auf diese Weise im Mittel stets erreicht und die Aktivierung der Wärmepumpeneinrichtung erfolgt zum best möglichen Zeitpunkt. Der COP ist dementsprechend hoch.

Die Zeichnungen stellen Ausführungsbeispiele der Erfindung dar und zeigen in:

Fig. 1   Eine Wärmepumpeneinrichtung mit einem Heizkreislauf und einer erfindungsgemäßen Regeleinheit;

Fig. 2   einen Hystereseverlauf einer Temperatur T8 zur Berechnung des Deaktivierungsphasenbeginns; und

Fig. 3   einen Hystereseverlauf einer Temperatur T1 zur Berechnung des Aktivierungsphasenbeginns.

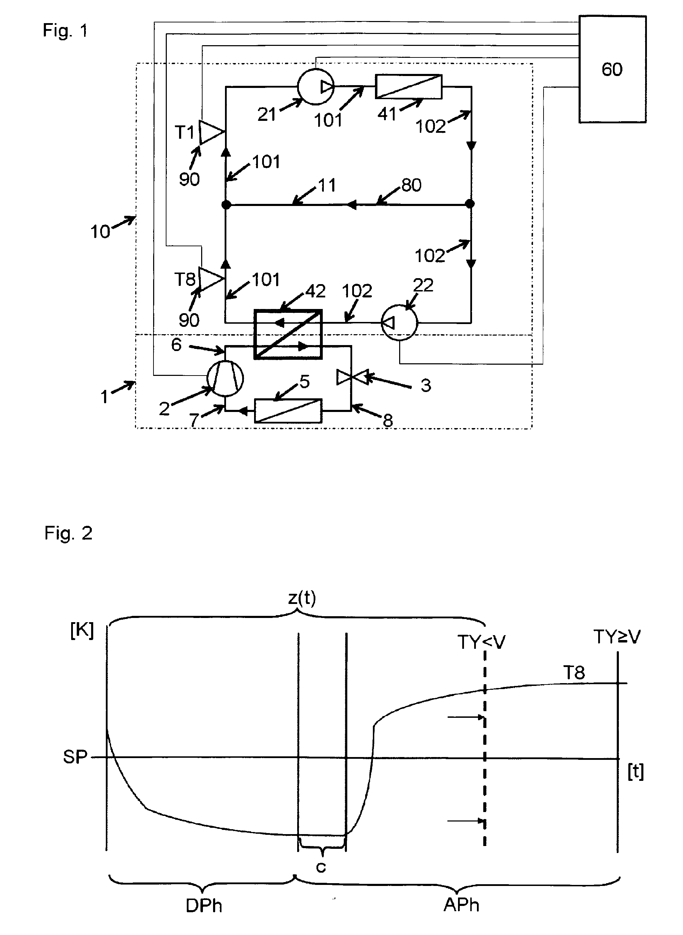

Fig. 1 zeigt eine Wärmepumpeneinrichtung 1 mit einem Heizkreislauf 10 und einer Regeleinheit 60.

Der von einem Heizmedium 11 durchströmte Heizkreislauf 10 besteht dabei aus einem ersten Wärmetauscher 41 und einen zweiten Wärmetauscher 42, die über einen Vorlauf 101 und einen Rücklauf 102 verbunden sind. Ein Bypass 80 verbindet den Vorlauf 101 hydraulisch mit dem Rücklauf 102. Weiterhin sind eine erste Pumpe 21 im Vorlauf 101 hinter dem Bypass 80 und eine zweite Pumpe 22 im Rücklauf 102 hinter dem Bypass 80 angeordnet.

Die Wärmepumpeneinrichtung 1 hat einen von Kältemittel 6 durchströmten Kreislauf, in dem der zweite Wärmetauscher 42 derart angeordnet ist, dass eine Wärmeübertragung zwischen dem Kältemittel 6 und dem Heizmedium 10 in dem zweiten Wärmtauscher 42 stattfinden kann. Insbesondere ist der zweite Wärmetauscher 42 weiterhin über eine Kompressor 2 aufweisende Zuleitung 7 und eine Expansionsventil 3 aufweisende Rückleitung 8 mit einem Verdampfer 5 verbunden.

Zusätzlich sind zwei Sensoren 90 vorgesehen Einer davon ist im Vorlauf 101 vor dem Bypass 80 zur Bestimmung einer Temperatur T8 und einer nach dem Bypass 80 zur Bestimmung einer Temperatur T1 angeordnet.

Zum Betrieb der Wärmepumpeneinrichtung 1 ist eine Regeleinheit 60 mit den Sensoren 90, den Pumpen 21,22 sowie dem Kompressor 2 verbunden.

Die Regeleinheit 60 kann nunmehr Aktivierungs- und Deaktivierungsphasen durch Aktivierung und Deaktivierung der Wärmepumpeneinrichtung 1 steuern, insbesondere durch Aktivierung und Deaktivierung des Kompressors 2. Eine Deaktivierung erfolgt, sobald ein Effizienzverlust TY durch eine Überhöhung der Temperatur T8 größer ist als ein Anfahrverlust V bei einem Neustart der Wärmepumpeneinrichtung 1. Dagegen wird der Kompressor 2 aktiviert, sobald eine verlorene Wärmemenge VW während der Deaktivierung des Kompressors 2 größer ist als eine erzeugte Wärmemenge ZW der vorangegangenen Aktivierung des Kompressors 2.

In einer Aktivierungsphase wird vom Kompressor 2 und dem Expansionsventil 3 ein Unterdruck im Verdampfer 5 und ein Überdruck im zweiten Wärmetauscher 42 erzeugt. Hierdurch ist die Temperatur des Kältemittels 6 im Verdampfer 5 niedrig und es kann Wärme aus der Umgebung oder einem umströmenden Medium aufnehmen. Die so gewonnene Wärme wird anschließend im unter hohen Druck stehenden zweiten Wärmetauscher 42 vom Kältemittel 6 auf das Heizmedium 11 übertragen.

Dahingegen nimmt das Heizmedium 11 in einer Deaktivierungsphase bei laufender zweiter Pumpe 22 nur noch Restwärme im zweiten Wärmetauscher 42 auf und kühlt durch Wärmeabgabe im ersten Wärmetauscher 41 ab. Es besteht die Möglichkeit, dass die Regeleinheit 60 in dieser Phase auch die zweite Pumpe 22 deaktiviert. Sofern gar kein Heizbedarf vorhanden ist, kann zusätzlich auch eine Deaktivierung der ersten Pumpe 21 erfolgen.

Fig. 2 zeigt ein Diagramm mit einer Zeit [t] auf der Abszisse und einer Temperatur [K] auf der Ordinate. In dem Diagramm sind zwei Graphen dargestellt. Zum einen wird eine konstante Solltemperatur SP gezeigt und zum anderen eine um diese schwankende Hysteresekurve einer Temperatur T8, die in erfindungsgemäßem Heizkreislauf die Temperatur des Heizmediums im Vorlauf vor dem Bypass ist. Die Solltemperatur SP ist dabei die Solltemperatur des Heizmediums im Vorlauf hinter dem Bypass. Nicht dargestellt ist eine Veränderung der Solltemperatur SP, wie sie zum Beispiel durch eine Verstellung der Heizung durch einen Benutzer auftreten könnte.

Auf der Abszisse sind weiterhin mehrere Betriebszustände einer erfindungsgemäßen Wärmepumpeneinrichtung abgebildet. Während einer Deaktivierungsphase DPh der Wärmepumpeneinrichtung sinkt die Temperatur T8 von oberhalb der Solltemperatur SP unter diese ab, wohingegen sie in einer Aktivierungsphase APh für eine Anfahrzeit c am Anfang nicht steigend ist, und anschließend bis zum Ende der Aktivierungsphase APh wieder bis oberhalb der Solltemperatur SP ansteigt.

Diese Temperaturverläufe der Solltemperatur SP und der Temperatur T8 dienen dazu, während einer Aktivierungsphase APh den Zeitpunkt zu bestimmen, in dem in eine erneute Deaktivierungsphase DPh geschaltet wird.

Hierzu wird ein Anfahrverlust V während der Zeit t derart berechnet, dass eine Zykluszeit z ab dem Zeitpunkt des Endes der vorhergehenden Aktivierungsphase (APh) regelmäßig bestimmt wird, zum Beispiel in einem bestimmten Rhythmus oder kontinuierlich, und diese Zykluszeit z minus der Anfahrzeit c durch die Zykluszeit z geteilt und mit 100% multipliziert wird. Dies entspricht:

$$V = \frac{z(t) - c}{z(t)} * 100\%$$

Gleichzeitig wird ein Effizienzverlust TY derart berechnet, dass ab dem Beginn der Aktivierungsphase APh regelmäßig, zum Beispiel in einem bestimmten Rhythmus oder kontinuierlich, die Differenz von der Solltemperatur SP minus der aktuellen Temperatur T8 mit einem Temperaturdeltafaktor TF multipliziert und zu 100% addiert, sowie aus den so ermittelten Werten einen Mittelwert berechnet wird. Das heißt:

$$TY = \frac{\sum_{1}^{n}\left[(SP(n) - T8(n)) * TF + 100\%\right]}{n} \qquad mit \ \frac{0\%}{K} \leq TF \leq \frac{5\%}{K}$$

Solange der Effizienzverlust TY einer Aktivierungsphase APh kleiner als der Anfahrverlust V ist, wird die Aktivierungsphase APh nicht beendet. Sobald der Effizienzverlust TY jedoch größer oder gleich dem Anfahrverlust V ist, wird in eine erneute Deaktivierungsphase DPh umgeschaltet.

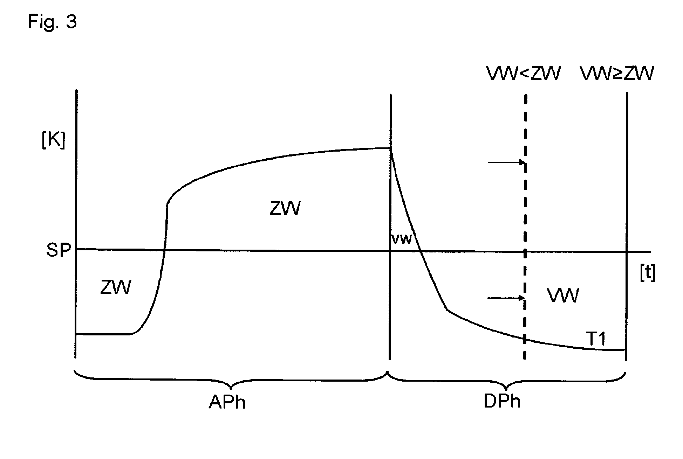

Fig. 3 enthält ein Diagramm mit einer Zeit [t] auf der Abszisse und einer Temperatur [K] auf der Ordinate. In dem Diagramm sind zwei Graphen dargestellt. Zum einen wird eine konstante Solltemperatur SP gezeigt, und zum anderen eine um diese schwankende Hysteresekurve einer Temperatur T1, die in erfindungsgemäßen Heizkreislauf die Temperatur des Heizmediums im Vorlauf hinter dem Bypass ist. Die Solltemperatur SP ist dabei die Solltemperatur des Heizmediums im Vorlauf hinter dem Bypass.

Auf der Abszisse sind weiterhin mehrere Betriebszustände einer erfindungsgemäßen Wärmepumpeneinrichtung abgebildet. Während einer Aktivierungsphase APh der Wärmepumpeneinrichtung steigt die Temperatur T1 über die Solltemperatur SP hinaus, wohingegen sie in einer Deaktivierungsphase wieder bis unterhalb der Solltemperatur SP abfällt.

Diese Temperaturverläufe der Solltemperatur SP und der Temperatur T1 dienen dazu, während einer Deaktivierungsphase DPh den Zeitpunkt zu bestimmen, indem in eine erneute Aktivierungsphase DPh geschaltet wird.

Hierzu wird eine erzeugte Wärmemenge ZW der vor der Deaktivierungsphase DPh liegenden Aktivierungsphase APh berechnet. Dies kann beispielsweise durch die Bildung eines Integrals über die Differenz der Temperatur T1 und der Solltemperatur SP, ab dem Beginn bis zum Ende der vorangegangenen Aktivierungsphase APh berechnet werden. Das heißt:

$$ZW = \int_{APh\ Anfang}^{APh\ Ende} T1(t) - SP(t)\ dt$$

Während der Deaktivierungsphase DPh wird weiterhin die verlorene Wärmemenge (VW) bestimmt, indem beispielsweise ein Integral über die Differenz der Temperatur T1 und der Solltemperatur SP, ab dem Beginn der Deaktivierungsphase (DPh) berechnet wird. Somit ist:

$$VW = - \int\limits_{DPh\,Anfang}^{t} T1(t) - SP(t)\,dt$$

Solange die verlorene Wärmemenge VW kleiner ist als die in der vorangegangen Aktivierungsphase erzeugte Wärmemenge ZW, wird die Deaktivierungsphase DPh nicht beendet. Sobald die verlorene Wärmmenge VW jedoch gleich oder größer ist als die erzeugte Wärmemenge ZW, wird von der Deaktivierungsphase DPh in eine Aktivierungsphase APh geschaltet. Das entspricht:

$$WENN \int\limits_{APh\,Anfang}^{APh\,Ende} T1(t) - SP(t)\,dt \le - \int\limits_{DPh\,Anfang}^{t} T1(t) - SP(t)\,dt \ \ DANN \ von\ Deaktivierungs -\ in$$

$$Aktivierungsphase\ schalten$$

Es ist jedoch auch möglich, ein Integral über die Differenz zwischen der Temperatur T1 und der Solltemperatur SP vom Beginn der Aktivierungsphase zu berechnen. Sobald das Integral während der Deaktivierungsphase DPh gleich oder kleiner null wird, so schaltet eine Regeleinheit von der Deaktivierungsphase DPh in eine Aktivierungsphase APh. Dies entspricht:

$$WENN \int\limits_{AnfangAPh}^{t} (T1(t) - SP(t))\,dt \le 0 \ \ DANN \ \ von\ Deaktivierungs -$$

$$in\ Aktivierungsphase\ schalten$$

### Bezugszeichen

| | | | |
|---|---|---|---|
| 1 | Wärmepumpeneinrichtung | APh | Aktivierungsphasen |
| 2 | Kompressor | DPh | Deaktivierungsphasen |
| 3 | Expansionsventil | | |
| 5 | Verdampfer | SP | Solltemperatur |
| 6 | Kältemittel | T1 | Temperatur |
| 7 | Zuleitung | T8 | Temperatur |
| 8 | Rückleitung | | |
| | | TY | Effizienzverlust |
| 10 | Heizkreislauf | | |
| 11 | Heizmedium | V | Anfahrverlust |
| 21 | erste Pumpe | c | Anfahrzeit |
| 22 | zweite Pumpe | z | Zykluszeit |
| 41 | erster Wärmetauscher | | |
| 42 | zweiter Wärmetauscher | VW | verlorene Wärmemenge |
| 60 | Regeleinheit | ZW | erzeugte Wärmemenge |
| 80 | Bypass | | |
| 90 | Sensor | | |
| 101 | Vorlauf | | |
| 102 | Rücklauf | | |

## Patentansprüche

1. Verfahren zum Betrieb einer Wärmepumpeneinrichtung (1) mit einem zugeordneten Heizkreislauf (10), in dem ein Heizmedium (11) zirkuliert, und der einen ersten Wärmetauscher (41) und einen zweiten Wärmetauscher (42) aufweist, die über einen Vorlauf (101) und einen Rücklauf (102) verbunden sind, wobei ein Bypass (80) den Vorlauf (101) und den Rücklauf (102) hydraulisch verbindet, eine erste Pumpe (21) im Vorlauf (101) hinter dem Bypass (80) oder im Rücklauf (102) vor dem Bypass (80) angeordnet ist, eine zweite Pumpe (22) im Vorlauf (101) vor dem Bypass (80) oder im Rücklauf (102) hinter dem Bypass (80) angeordnet ist, und wobei die Wärmepumpeneinrichtung (1) und der Heizkreislauf (10) über den zweiten Wärmetauscher (42) thermisch gekoppelt sind, wobei eine Regeleinheit (60) die Wärmepumpeneinrichtung deaktiviert, **dadurch gekennzeichnet, dass** die Regeleinheit (60) die Wärmepumpeneinrichtung (1) deaktiviert, sobald ein Effizienzverlust (TY) der Wärmepumpeneinrichtung größer ist als ein Anfahrverlust (V) bei einem Neustart der Wärmepumpeneinrichtung (1).

2. Verfahren nach Anspruch 1,
**dadurch gekennzeichnet, dass** eine Temperatur (T8) des Heizmediums (11) im Vorlauf (101) vor dem Bypass (80) bestimmt wird.

3. Verfahren nach einem der vorhergehenden Ansprüche,
**dadurch gekennzeichnet, dass** eine Solltemperatur (SP) für das Heizmedium (11) im Vorlauf (101) hinter dem Bypass (80) vorgegeben wird.

4. Verfahren nach einem der vorhergehenden Ansprüche,
**dadurch gekennzeichnet, dass** ein Temperaturdeltafaktor TF vorgegeben wird.

5. Verfahren nach den Ansprüchen 2 bis 4,
**dadurch gekennzeichnet, dass** der Effizienzverlust (TY) ermittelt wird.

6. Verfahren nach einem der vorhergehenden Ansprüche,
**dadurch gekennzeichnet, dass** eine Zykluszeit (z) ab dem Zeitpunkt des Endes der vorhergehenden Aktivierung der Wärmepumpeneinrichtung (1) bestimmt wird.

7. Verfahren nach einem der vorhergehenden Ansprüche,
**dadurch gekennzeichnet, dass** eine Anfahrzeit (c) vorgebbar ist oder aus den vorausgegangenen Aktivierungen bestimmt wird.

8. Verfahren nach den Ansprüchen 6 und 7,
**dadurch gekennzeichnet, dass** der Anfahrverlust (V) ermittelt wird.

9. Verfahren nach Anspruch 3,
**dadurch gekennzeichnet, dass** eine Temperatur (T1) im Vorlauf (101) hinter dem Bypass (80) bestimmt wird.

10. Verfahren nach Anspruch 9,
**dadurch gekennzeichnet, dass** die Regeleinheit (60) die Wärmepumpeneinrichtung (1) aktiviert, sobald eine verlorene Wärmemenge (VW) am ersten Wärmetauscher (41) während der Deaktivierung der Wärmepumpeneinrichtung (1) größer ist als eine am zweiten Wärmetauscher (42) zugeführte, durch die Wärmepumpe erzeugte Wärmemenge (ZW) der vorangegangenen Aktivierung der Wärmepumpeneinrichtung (1).

11. Verfahren nach Anspruch 10,
**dadurch gekennzeichnet, dass** die verlorene Wärmemenge (VW) bestimmt wird.

12. Verfahren nach einem der Ansprüche 10 oder 11,
**dadurch gekennzeichnet, dass** die erzeugte Wärmemenge (ZW) bestimmt wird.

13. Verfahren nach Anspruch 9,
**dadurch gekennzeichnet, dass** die Regeleinheit (60) die Wärmepumpeneinrichtung (1) aktiviert, sobald ein Integral über die Differenz der Temperatur (T1) minus der Solltemperatur (SP), ab dem Startzeitpunkt der vorhergehenden Aktivierung der Wärmepumpeneinrichtung (1) während der Deaktivierung der Wärmepumpeneinrichtung (1) kleiner als null ist.

**Claims**

1. Method for operating a heat pump device (1) having an associated heating circuit (10) in which a heating medium (11) circulates and which has a first heat exchanger (41) and a second heat exchanger (42) which are connected via a feed line (101) and a return line (102), wherein a bypass (80) hydraulically connects the feed line (101) and the return line (102), a first pump (21) is arranged in the feed line (101) downstream of the bypass (80) or in the return line (102) upstream of the bypass (80), a second pump (22) is arranged in the feed line (101) upstream of the bypass (80) or in the return line (102) downstream of the bypass (80), and wherein the heat pump device (1) and the heating circuit (10) are thermally coupled by way of the second heat exchanger (42), wherein a regulating unit (60) deactivates the heat pump device, **characterized in that** the regulating unit (60) deactivates the heat pump device (1) when an efficiency loss (TY) of the heat pump device is greater than a start-up loss (V) during a restart of the heat pump device (1).

2. Method according to Claim 1,
**characterized in that** a temperature (T8) of the heating medium (11) in the feed line (101) upstream of the bypass (80) is determined.

3. Method according to one of the preceding claims,
**characterized in that** a target temperature (SP) for the heating medium (11) in the feed line (101) downstream of the bypass (80) is predefined.

4. Method according to one of the preceding claims,
**characterized in that** a temperature delta factor TF is predefined.

5. Method according to Claims 2 to 4,
**characterized in that** the efficiency loss (TY) is determined.

6. Method according to one of the preceding claims,
**characterized in that** a cycle time (z) is determined starting from the instant of the end of the preceding activation of the heat pump device (1).

7. Method according to one of the preceding claims,
**characterized in that** a start-up time (c) can be predefined or is determined from the preceding activations.

8. Method according to Claims 6 and 7,
**characterized in that** the start-up loss (V) is determined.

9. Method according to Claim 3,
**characterized in that** a temperature (T1) in the feed line (101) downstream of the bypass (80) is determined.

10. Method according to Claim 9,
**characterized in that** the regulating unit (60) activates the heat pump device (1) when a lost heat quantity (VW) at the first heat exchanger (41) during the deactivation of the heat pump device (1) is greater than a heat quantity (ZW), generated by the heat pump and supplied at the second heat exchanger (42), of the preceding activation of the heat pump device (1).

11. Method according to Claim 10,
**characterized in that** the lost heat quantity (VW) is determined.

12. Method according to either of Claims 10 and 11,
**characterized in that** the generated heat quantity (ZW) is determined.

13. Method according to Claim 9,
**characterized in that** the regulating unit (60) activates the heat pump device (1) when an integral of the difference of the temperature (T1) minus the target temperature (SP) during the deactivation of the heat pump device (1), starting from the starting instant of the preceding activation of the heat pump device (1), is less than zero.

**Revendications**

1. Procédé de fonctionnement d'un dispositif de pompe à chaleur (1) comprenant un circuit de chauffage associé (10) dans lequel circule un milieu chauffant (11), et qui présente un premier échangeur de chaleur (41) et un deuxième échangeur de chaleur (42) qui sont connectés par le biais d'une conduite aller (101) et d'une conduite retour (102), une dérivation (80) reliant hydrauliquement la conduite aller (101) et la conduite retour (102), une première pompe (21) étant disposée dans la conduite aller (101) derrière la dérivation (80) ou dans la conduite retour (102) avant la dérivation (80), une deuxième pompe (22) étant disposée dans la conduite aller (101) avant la dérivation (80) ou dans la conduite retour (102) derrière la dérivation (80), et le dispositif de pompe à chaleur (1) et le circuit de chauffage (10) étant accouplés thermiquement par le biais du deuxième échangeur de chaleur (42), une unité de régulation (60) désactivant le dispositif de pompe à chaleur, **caractérisé en ce que** l'unité de régulation (60) désactive le dispositif de pompe à chaleur (1) dès qu'une perte d'efficacité (TY) du dispositif de pompe à chaleur est supérieure à une perte au démarrage (V) lors d'un nouveau démarrage du dispositif de pompe à chaleur (1).

2. Procédé selon la revendication 1, **caractérisé en ce qu'**une température (T8) du milieu chauffant (11) est déterminée dans la conduite aller (101) avant la dérivation (80).

3. Procédé selon l'une quelconque des revendications précédentes, **caractérisé en ce qu'**une température de consigne (SP) pour le milieu chauffant (11) est prédéfinie dans la conduite aller (101) derrière la dérivation (80).

4. Procédé selon l'une quelconque des revendications précédentes, **caractérisé en ce qu'**un facteur delta de température (TF) est prédéfini.

5. Procédé selon les revendications 2 à 4, **caractérisé en ce que** la perte d'efficacité (TY) est déterminée.

6. Procédé selon l'une quelconque des revendications précédentes, **caractérisé en ce qu'**un temps de cycle (z) est déterminé à partir de l'instant de la fin de l'activation précédente du dispositif de pompe à chaleur (1).

7. Procédé selon l'une quelconque des revendications précédentes, **caractérisé en ce qu'**un temps de démarrage (c) peut être prédéfini ou est déterminé à partir des activations précédentes.

8. Procédé selon les revendications 6 et 7, **caractérisé en ce que** la perte au démarrage (V) est déterminée.

9. Procédé selon la revendication 3, **caractérisé en ce qu'**une température (T1) est déterminée dans la conduite aller (101) derrière la dérivation (80).

10. Procédé selon la revendication 9, **caractérisé en ce que** l'unité de régulation (60) active le dispositif de pompe à chaleur (1) dès qu'une quantité de chaleur perdue (VW) au niveau du premier échangeur de chaleur (41) pendant la désactivation du dispositif de pompe à chaleur (1) est supérieure à une quantité de chaleur (ZW) de l'activation précédente du dispositif de pompe à chaleur (1) produite par la pompe à chaleur, acheminée au deuxième échangeur de chaleur (42).

11. Procédé selon la revendication 10, **caractérisé en ce que** la quantité de chaleur perdue (VW) est déterminée.

12. Procédé selon l'une quelconque des revendications 10 ou 11, **caractérisé en ce que** la quantité de chaleur produite (ZW) est déterminée.

13. Procédé selon la revendication 9, **caractérisé en ce que** l'unité de régulation (60) active le dispositif de pompe à chaleur (1), dès qu'une intégrale de la différence de la température (T1) moins la température de consigne (SP) à partir de l'instant du début de l'activation précédente du dispositif de pompe à chaleur (1) pendant la désactivation du dispositif de pompe à chaleur (1) est inférieure à zéro.

EP 2 652 409 B1

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1507122 A1